# EUROPEAN PATENT APPLICATION

(11) **EP 2 966 815 A1**
(43) Date of publication of application: **13.01.2016**
(21) Application number: 14879258.3
(22) Date of filing: 29.05.2014
(51) Int. Cl.: H04L 12/741

(54) **PACKET FORWARDING METHOD AND VXLAN GATEWAY**

(71) Applicant: Huawei Technologies Co. Ltd., Shenzhen, Guangdong 518129 (CN)
(72) Inventor: CHEN, Hanbing, Shenzhen Guangdong 518129 (CN); SONG, Yu, Shenzhen Guangdong 518129 (CN); XIONG, Zhiqiang, Shenzhen Guangdong 518129 (CN)
(74) Representative: Thun, Clemens
(86) International application number: PCT/CN2014/078760
(87) International publication number: WO 2015/180084

(57) **Abstract**

The present invention provides a packet forwarding method and a VxLAN gateway. A VxLAN packet is received, where a payload of the VxLAN packet includes a communication packet that is sent by a first VM to a second VM; a second VNI of a subnet in which a next-hop device of the communication packet is located is determined according to a first VNI in a packet header of the VxLAN packet and an IP address of the second VM in the payload ; the communication packet is encapsulated according to the second VNI; and then an encapsulated VxLAN packet is forwarded to the next-hop device through a tunnel corresponding to the second VNI, to avoid that the VxLAN gateway can implement forwarding of the VxLAN packet only after the VxLAN gateway modifies the communication packet in the payload of the VxLAN packet, and improve efficiency of forwarding the VxLAN packet.

## Description

### TECHNICAL FIELD

The present invention relates to communications technologies, and in particular to a packet forwarding method and a VxLAN gateway.

### BACKGROUND

A virtual extensible local area network (Virtual Extensible Local Area Network, VxLAN) technology is a technology that is used to extend network virtualization to obtain a sufficient number of virtual networks for use of users.

However, in the prior art, when forwarding a VxLAN packet to a next-hop device, a VxLAN gateway needs to modify a communication packet in a payload of the VxLAN packet, that is, to change source MAC in the communication packet to a MAC address of the VxLAN gateway, and change destination MAC in the communication packet to a MAC address of the next-hop device, to implement forwarding the VxLAN packet to the next-hop device, which reduces efficiency of forwarding the VXLAN packet.

### SUMMARY

Embodiments of the present invention provide a packet forwarding method and a VxLAN gateway, to improve efficiency of forwarding a VxLAN packet.

A first aspect of the embodiments of the present invention provides a packet forwarding method, including: receiving, by a virtual extensible local area network VxLAN gateway, a VxLAN packet, where a payload of the VxLAN packet includes a communication packet, a packet header of the VxLAN packet includes a first virtual extensible local area network network identifier VNI, the communication packet is a packet sent by a first virtual machine VM to a second VM, the first VM and the second VM belong to different subnets, the communication packet includes an IP address of the second VM, and the first VNI is a network identifier of a subnet in which the first VM is located; decapsulating, by the VxLAN gateway, the VxLAN packet to obtain the first VNI and the communication packet; determining, by the VxLAN gateway according to the IP address of the second VM and the first VNI, a second VNI of a subnet in which a next-hop device of the communication packet is located; encapsulating, by the VxLAX gateway, the communication packet according to the second VNI, to obtain an encapsulated VxLAX packet, where a packet header of the encapsulated VxLAX packet includes the second VNI, and a payload of the encapsulated VxLAX packet includes the communication packet; and sending, by the VxLAX gateway, the encapsulated VxLAX packet to the next-hop device of the communication packet through a tunnel corresponding to the second VNI.

In a first possible implementation manner of the first aspect, the determining, by the VxLAN gateway according to the IP address of the second VM and the first VNI, a second VNI of a subnet in which a next-hop device of the communication packet is located includes: determining, by the VxLAN gateway according to the first VNI, a routing table associated with the first VNI, where in the routing table associated with the first VNI, network identifiers of subnets in which next-hop devices corresponding to a same IP address are located are the same; and querying, by the VxLAN gateway according to the IP address of the second VM, the routing table associated with the first VNI, to obtain the second VNI.

With reference to the first possible implementation manner of the first aspect, in a second possible implementation manner of the first aspect, when the routing table associated with the first VNI is pre-configured in a software defined network SDN controller, the querying, by the VxLAN gateway according to the IP address of the second VM, the routing table associated with the first VNI, to obtain the second VNI includes: querying, by the VxLAN gateway, the SDN controller according to the first VNI and the IP address of the second VM, to obtain the second VNI.

With reference to the first aspect, the first possible implementation manner of the first aspect, and the second possible implementation manner of the first aspect, in a third possible implementation manner of the first aspect, the encapsulating, by the VxLAX gateway, the communication packet according to the second VNI includes: changing, by the VxLAN gateway, the first VNI in the packet header of the VxLAN packet to the second VNI.

A second aspect of the embodiments of the present invention provides a VxLAN gateway, including: a receiving module, configured to receive a VxLAN packet, where a payload of the VxLAN packet includes a communication packet, a packet header of the VxLAN packet includes a first virtual extensible local area network network identifier VNI, the communication packet is a packet sent by a first virtual machine VM to a second VM, the first VM and the second VM belong to different subnets, the communication packet includes an IP address of the second VM, and the first VNI is a network identifier of a subnet in which the first VM is located; a decapsulating module, configured to decapsulate the VxLAN packet to obtain the first VNI and the communication packet; a processing module, configured to determine, according to the IP address of the second VM and the first VNI, a second VNI of a subnet in which a next-hop device of the communication packet is located; an encapsulating module, configured to encapsulate the communication packet according to the second VNI, to obtain an encapsulated VxLAX packet, where a packet header of the encapsulated VxLAX packet includes the second VNI, and a payload of the encapsulated VxLAX packet includes the communication packet; and a forwarding module, configured to send the encapsulated VxLAX packet to the next-hop device of the communication packet through a tunnel corresponding to the second VNI.

In a first possible implementation manner of the second aspect, the processing module includes: a determining unit, configured to determine, according to the first VNI, a routing table associated with the first VNI, where in the routing table associated with the first VNI, network identifiers of subnets in which next-hop devices corresponding to a same IP address are located are the same; and a querying unit, configured to query, according to the IP address of the second VM, the routing table associated with the first VNI, to obtain the second VNI.

With reference to the first possible implementation manner of the second aspect, in a second possible implementation manner of the second aspect, when the routing table associated with the first VNI is pre-configured in a software defined network SDN controller, the querying unit is specifically configured to query the SDN controller according to the first VNI and the IP address of the second VM, to obtain the second VNI.

With reference to the second aspect, the first possible implementation manner of the second aspect, and the second possible implementation manner of the second aspect, in a third possible implementation manner of the second aspect, the encapsulating module is specifically configured to change the first VNI in the packet header of the VxLAN packet to the second VNI.

A third aspect of the embodiments of the present invention provides a VxLAN gateway, including a processor, a memory, and a bus, where
the memory is configured to store a computer executable instruction; the processor is connected to the memory by using the bus; and when the VxLAN gateway runs, the processor executes the computer executable instruction stored in the memory, so that the VxLAN gateway executes the packet forwarding method according to the first aspect and any one of the possible implementation manners of the first aspect.

A fourth aspect of the embodiments of the present invention provides a computer readable medium, including a computer executable instruction; when a processor of a computer executes the computer executable instruction, the computer executes the packet forwarding method according to the first aspect and any one of the possible implementation manners of the first aspect.

According to the packet forwarding method and the VxLAN gateway that are provided in the embodiments of the present invention, a VxLAN packet is received, where a payload of the VxLAN packet includes a communication packet that is sent by a first VM to a second VM; a second VNI of a subnet in which a next-hop device of the communication packet is located is determined according to a VNI in a packet header of the VxLAN packet and an IP address of the second VM in the payload; the communication packet is encapsulated according to the second VNI; and then an encapsulated VxLAN packet is forwarded to the next-hop device through a tunnel corresponding to the second VNI. Because the VxLAN gateway determines, according to the IP address of the second VM and a first VNI, the second VNI of the subnet in which the next-hop device of the communication packet is located, a unique next-hop device may be determined, and the VxLAN packet is forwarded to the next-hop device accordingly, thereby avoiding that the VxLAN gateway can implement forwarding of the VxLAN packet only after the VxLAN gateway modifies the communication packet in the payload of the VxLAN packet, and improving efficiency of forwarding the VxLAN packet.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a packet forwarding method according to an embodiment of the present invention;
FIG. 2 is a schematic flowchart of a packet forwarding method according to another embodiment of the present invention;
FIG. 3 is a schematic structural diagram of a VxLAN gateway according to an embodiment of the present invention;
FIG. 4 is a schematic structural diagram of a VxLAN gateway according to another embodiment of the present invention; and
FIG. 5 is a schematic structural diagram of a VxLAN gateway according to still another embodiment of the present invention.

### DESCRIPTION OF EMBODIMENTS

To make the objectives, technical solutions, and advantages of the embodiments of the present invention clearer, the following clearly and integratedly describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

As stipulated in the VxLAN protocol, a VxLAN packet generally includes a payload and a packet header, where the packet header generally includes information that is used to forward the VxLAN packet, such as a 24-bit (bit) virtual extensible local area network network identifier (VxLAN Network Identifier, VNI), an IP address of a source NVE, and an IP address of a destination NVE; and the payload generally includes a communication packet that is used for communication between virtual machines (virtual machine, VM), such as a data packet, a MAC address of a source VM, and a MAC address of a destination VM. Generally, when a source VM sends a communication packet to a destination VM, a source NVE adds a packet header to the communication packet sent by the source VM. If the source VM and the destination VM belong to different subnets, the source NVE forwards the communication packet added the packet header and sent by the source VM to the VxLAN gateway. When forwarding the packet to a next-hop device, the VxLAN gateway needs to modify the communication packet sent by the source VM, that is, to change source MAC in the communication packet sent by the source VM to a MAC address of the VxLAN gateway, and change destination MAC in the communication packet to a MAC address of the next-hop deviceto forward the packet to the next-hop device, which reduces efficiency of forwarding the VxLAN packet.

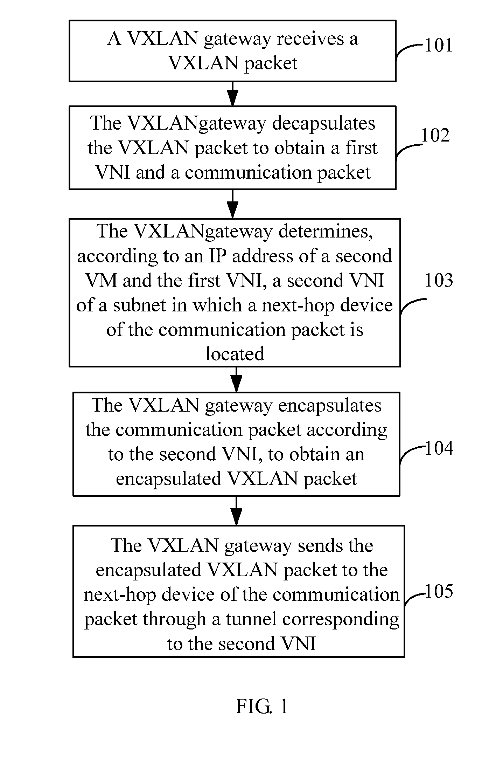

To resolve the foregoing problem, an embodiment of the present invention provides a packet forwarding method. FIG. 1 is a schematic flowchart of a packet forwarding method according to an embodiment of the present invention. As shown in FIG. 1, the method provided in this embodiment of the present invention may be executed by a VxLAN gateway, and specifically includes:

101. The VxLAN gateway receives a VxLAN packet.

A payload of the VxLAN packet includes the communication packet, and a packet header of the VxLAN packet includes a first VNI, where the communication packet is a packet sent by a first virtual machine VM to a second VM, and the first VM and the second VM belong to different subnets; and the communication packet includes an IP address of the second VM, and the first VNI is a network identifier of a subnet in which the first VM is located.

Specifically, the first VM and the second VM belong to different subnets. When the first VM (that is, a source VM) is required to send the communication packet to the second VM (that is, a destination VM), the VxLAN gateway is required to participate. A source NVE corresponding to the first VM may encapsulate the communication packet from the first VM to obtain a VxLAN packet, and sends the obtained VxLAN packet to the VxLAN gateway (that is, a gateway of the subnet in which the first VM is located), so that the VxLAN gateway can receive the VxLAN packet sent by the source VNE. Encapsulating the communication packet to obtain the VxLAN packet may be: encapsulating the communication packet as a payload part of the VxLAN packet, and then adding a packet header, where the packet header includes the network identifier of the subnet in which the first VM is located, that is, the first VNI.

102. The VxLAN gateway decapsulates the VxLAN packet to obtain the first VNI and the communication packet.

The VxLAN gateway may decapsulate the VxLAN packet according to the VxLAN protocol, to obtain the first VNI in the packet header of the VxLAN packet and the communication packet in the payload of the VxLAN packet.

103. The VxLAN gateway determines, according to the IP address of the second VM and the first VNI, a second VNI of a subnet in which a next-hop device of the communication packet is located.

Specifically, a routing table associated with the first VNI may be pre-configured in a software defined network (Software Defined Network, SDN) controller, where in the routing table associated with the first VNI, network identifiers of subnets in which next-hop devices corresponding to a same IP address are located are the same; the VxLAN gateway may query the SDN controller according to the first VNI and the IP address of the second VM, to determine a network identifier of a subnet in which a next-hop device corresponding to the IP address of the second VM is located, that is, to determine the second VNI of the subnet in which the next-hop device of the communication packet is located.

104. The VxLAX gateway encapsulates the communication packet according to the second VNI, to obtain an encapsulated VxLAX packet.

A packet header of the encapsulated VxLAX packet includes the second VNI, and a payload of the encapsulated VxLAX packet includes the communication packet. Therefore, when encapsulating the communication packet, the VxLAX gateway does not need to change a source MAC address or a destination MAC address in the communication packet, thereby improving efficiency of forwarding the VxLAN packet.

Specifically, the VxLAN gateway may change the first VNI in the packet header of the VxLAN packet to the second VNI, and then encapsulate the communication packet in the payload part of the VxLAN packet, to obtain an encapsulated VxLAX packet.

105. The VxLAX gateway sends the encapsulated VxLAX packet to the next-hop device of the communication packet through a tunnel corresponding to the second VNI.

It should be noted that the next-hop device in this embodiment may be another VxLAN gateway that is different from the VxLAN gateway that implements the foregoing packet forwarding method. After receiving the encapsulated VxLAX packet, the another VxLAN gateway may directly or indirectly forward the encapsulated VxLAX packet to the second VM. In addition, after the second VM in this embodiment receives the communication packet, the second VM generates a response in response to the communication packet to be sent to the first VM, so that the next-hop device encapsulates the response to obtain a second VxLAN packet, and the VxLAN gateway in this embodiment needs to forward the second VxLAN packet. In both of the foregoing two scenarios, the foregoing packet forwarding method may be used to forward the VxLAN packet. The only difference lies in that, in the foregoing two scenarios, there is a case in which the second VNI obtained by querying in step 103 may be the same as a VNI of a subnet in which a destination VM of the communication packet is located, so that the source MAC address and the destination MAC address in the communication packet are required to be changed before step 104.

To clearly describe the packet forwarding method in the foregoing two scenarios, specifically, a procedure for forwarding the second VxLAN packet by the VxLAX gateway in this embodiment is used as an example for specific description.

The VxLAN gateway receives the second VxLAN packet, where a packet header of the second VxLAN packet includes the first VNI, and a payload of the second VxLAN packet includes a second communication packet; the second communication packet is a packet sent by the second VM to the first VM, and the second communication packet includes an IP address of the first VM. Correspondingly, the foregoing communication packet sent by the first VM to the second VM may also be called a first communication packet, and a VxLAN packet obtained by encapsulating the first communication packet may also be called a first VxLAN packet.

The VxLAN gateway decapsulates the second VxLAN packet to obtain the first VNI and the second communication packet.

The VxLAN gateway determines, according to the first VNI, the routing table associated with the first VNI, queries, according to the IP address of the first VM, the routing table associated with the first VNI, and determines a second VNI of a subnet in which a next-hop device of the second communication packet is located.

If the subnet in which the next-hop device of the second communication packet is located is the same as the subnet in which the first VM is located, the VxLAN gateway modifies the second communication packet, where a source MAC address in the modified second communication packet is a MAC address of the VxLAN gateway, and a destination MAC address in the modified second communication packet is a MAC address of the first VM, and encapsulates, according to the VNI of the subnet in which the next-hop device of the second communication packet is located, the modified second communication packet, where a payload of the encapsulated second VxLAX packet includes the modified second communication packet, and a packet header of the encapsulated second VxLAX packet includes the VNI of the subnet in which the next-hop device of the second communication packet is located.

The VxLAX gateway sends, according to the VNI of the subnet in which the next-hop device of the second communication packet is located, the encapsulated second VxLAX packet to a network virtualization endpoint (network virtualization endpoint, NVE) of the subnet in which the first VM is located, so as to send the VxLAX packet to the first VM.

The method for obtaining the MAC address of the first VM by the VxLAN gateway may be that: the VxLAN gateway generates an Address Resolution Protocol ARP request, where the ARP request is used to request the MAC address of the first VM; the VxLAN gateway encapsulates the ARP request as a VxLAN multicast packet, and then multicasts, according to the VxLAN protocol, the VxLAN multicast packet, so that the VxLAN gateway receives an ARP response indicating the MAC address of the first VM, and obtains the MAC address of the first VM from the ARP response.

In this embodiment of the present invention, a VxLAN packet is received, where a payload of the VxLAN packet includes a communication packet that is sent by a first VM to a second VM; a second VNI of a subnet in which a next-hop device of the communication packet is located is determined according to a VNI in a packet header of the VxLAN packet and an IP address of the second VM in the payload; the communication packet is encapsulated according to the second VNI; and then an encapsulated VxLAN packet is forwarded to the next-hop device through a tunnel corresponding to the second VNI. Because the VxLAN gateway determines, according to the IP address of the second VM and a first VNI, the second VNI of the subnet in which the next-hop device of the communication packet is located, a unique next-hop device may be determined, and the VxLAN packet is forwarded to the next-hop device accordingly, thereby avoiding that the VxLAN gateway can forward the VxLAN packet only after the VxLAN gateway modifies the communication packet in the payload of the VxLAN packet, and improving efficiency of forwarding the VxLAN packet.

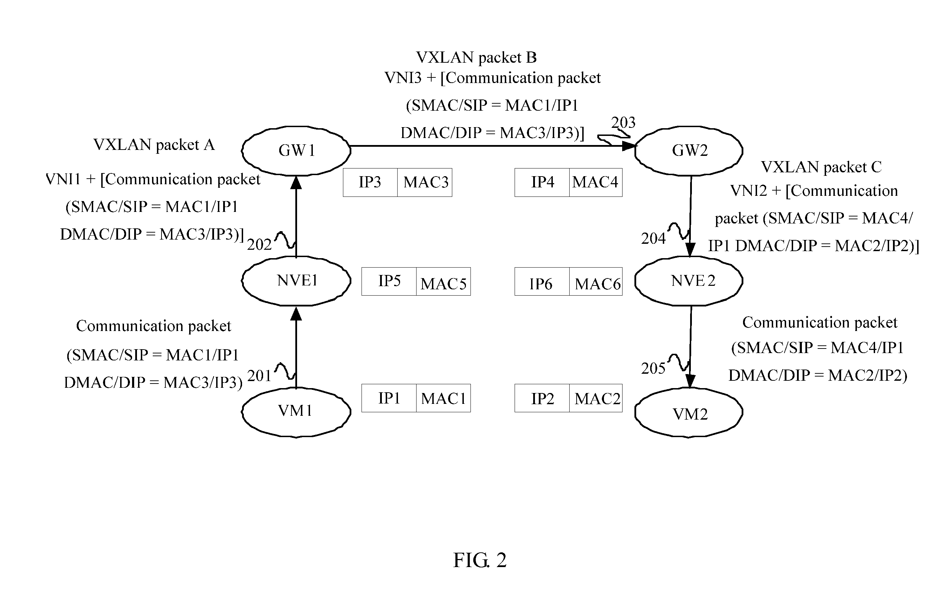

FIG. 2 is a schematic flowchart of a packet forwarding method according to another embodiment of the present invention. In this embodiment, VM1 (whose IP address and MAC address are IP1 and MAC1 respectively) corresponds to NVE1 (whose IP address and MAC address are IP5 and MAC5 respectively); GW1 (whose IP address and MAC address are IP3 and MAC3 respectively) is a gateway of a subnet in which VM1 is located; VM2 (whose IP address and MAC address are IP2 and MAC2 respectively) and VM1 belong to different subnets; VM2 corresponds to NVE2 (whose IP address and MAC address are IP6 and MAC6) respectively; and GW2 (whose IP address and MAC address are IP4 and MAC4 respectively) is a gateway of a subnet in which VM2 is located. As shown in FIG. 2, the packet forwarding method includes:

201. When VM1 accesses VM2 that is in a different subnet from VM1, VM1 generates a communication packet according to a locally stored MAC-IP mapping relationship, and sends the communication packet to NVE1 to which VM1 belongs.

Source MAC (SMAC), source IP (SIP), and destination MAC (DMAC), and destination IP (DIP) in the communication packet are MAC1, IP1, MAC3, and IP2 respectively. That is, the source MAC and the source IP in the communication packet are the MAC address and the IP address of VM1 respectively, the destination MAC in the communication packet is the MAC address of GW1, the gateway of the subnet in which VM1 is located, and the destination IP address in the communication packet is the IP address of VM2.

Specifically, when VM1 needs to access VM2, VM1 first queries the pre-generated MAC-IP mapping relationship according to the IP address IP2 of VM2, to obtain the MAC address MAC3 corresponding to IP2; then VM1 generates a communication packet by using MAC3 corresponding to IP2 as a destination MAC address and IP2 as a destination IP. After generating the communication packet, VM1 sends the generated communication packet to a NVE1 corresponding to VM1. It may be found that the destination MAC in the communication packet, that is, MAC3, is not the MAC address of VM2. This is because when VM1 learns only the IP address of VM2, VM1 first generates, according to the IP address of VM2, an ARP request that is used to obtain the MAC address of VM2, and sends the ARP request to obtain the MAC address of VM2 from the ARP response. However, because VM1 and VM2 are not in a same subnet, the MAC address obtained by VM1 from the ARP response is essentially MAC3, the MAC address of GW1, the VxLAN gateway of the subnet in which VM1 is located, but not the MAC address of VM2. Further, a reason thereof is analyzed as follows: when receiving the ARP request, GW1 determines, according to a source IP and a destination IP in the ARP request, that the destination IP and the source IP are not in a same subnet, uses MAC3, the MAC address of GW1 as a source MAC of the ARP response, and returns the ARP response. Therefore, a MAC-IP mapping relationship stored by a VM is a correspondence between MAC3 and IP2. As a result, the destination IP in the communication packet is the IP address of VM2, and the destination MAC in the communication packet is the MAC address of GW1, the gateway of the subnet in which VM1 is located.

202. NVE1 encapsulates the communication packet to obtain a VxLAN packet A, and sends the VxLAN packet A to GW1 indicated by the destination MAC address in the communication packet.

Specifically, after receiving the communication packet, NVE1 may first query, according to the source IP in the communication packet, a correspondence between an IP address and a subnet of a virtual machine and is pre-configured in an SDN controller, to determine that a subnet in which a source virtual machine VM1 sending the communication packet locates is VNI1. Then, the NVE1 may send the communication packet to the SDN controller, and inform the SDN that the subnet in which the source virtual machine sending the communication packet is located is VNI1. After receiving the communication packet, the SDN controller queries, according to the destination IP in the communication packet, namely IP2, correspondence between an IP address and a subnet of a virtual machineto obtain a subnet corresponding to the IP2. Because the VM1 and the VM2 belong to different subnets in this embodiment, that is, a subnet identifier corresponding to the IP2 of the VM2 is not the subnet identifier VNI1 of the subnet in which the VM1 is located, the SDN controller may determine that the subnet in which a destination virtual machine receiving the communication packet is located is different from the subnet in which the source virtual machine sending the communication packet is located; then the SDN controller instructs the NVE1 to send the VXLAN packet tothe gateway GW1 to which the VM1 belongs. The NVE1 encapsulates the communication packet according to a VNI identifier VNI1 of VM1 to obtain the VxLAN packet A, where a packet header of the VxLAN packet A includes the VNI1, and a payload of the VxLAN packet A includes the communication packet. The communication packet in the payload of the VxLAN packet A is the same as the communication packet generated by VM1. That is, the NVE1 does not modify the source IP, the source MAC, the destination IP, or the destination MAC in the communication packet.

203. GW1 queries a pre-configured routing table according to the VxLAN packet A to obtain a next-hop device GW2, and modifies, according to a VNI of the next-hop device GW2, the packet header of the VxLAN packet A to obtain a VxLAN packet B, and sends the VxLAN packet B to the next-hop device GW2.

Specifically, after decapsulating the VxLAN packet A, GW1 obtains the subnet identifier VNI1 from the packet header of the VxLAN packet A, and obtains the communication packet from the payload of the VxLAN packet A, where the destination IP in the communication packet is IP2. Then, the GW1 may search, according to VNI1 in the packet header of the VxLAN packet A, a destination routing table associated with the VNI1 in the packet header of the VxLAN packet Aamong routing tables pre-configured by the SDN controller; and may query the destination routing table according to the destination IP in the communication packet to obtain a tunnel VNI3 corresponding to the destination IP, where the tunnel is used to connect GW1 and GW2. Therefore, GW1 may forward, through the tunnel, the packet to the next-hop device GW2 with a VNI identifier VNI3. The GW1 does not modify the decapsulated communication packet, but directly encapsulates the decapsulated communication packet as a payload part of the modified VXLAN packet, that is, a payload part of the VxLAN packet B. In addition, because the VNI1 in the packet header is different from the VNI3 of the next-hop device GW2, the GW1 changes the VNI1 in the packet header of the VxLAN packet A to the VNI3 of the next-hop device GW2, and takes the packet header of the modified VxLAN packet as a packet header part of the VxLAN packet B.

204. GW2 queries the pre-configured routing table according to the received VxLAN packet B to obtain a next-hop device, modifies both the packet header and the payload of the VxLAN packet B to obtain a VxLAN packet C, and sends the VxLAN packet C to the next-hop device.

Specifically, after decapsulating the VxLAN packet B, GW2 obtains the subnet identifier VNI3 from the packet header of the VxLAN packet B, and obtains the communication packet from the payload of the VxLAN packet B, where the destination IP in the communication packet is IP2. Then, the GW2 may search, according to the VNI3 in the packet header of the VxLAN packet B, a destination routing table associated with a VNI identifier in the packet header of the VXLAN packet B among pre-configured routing tables; and may query the destination routing table according to the destination IP in the communication packet to obtain VNI2, a VNI of a next-hop device corresponding to the destination IP. Because the queried VNI2 is the same as the VNI of the subnet in which the VM2 is located, the destination MAC and the source MAC in the communication packet need to be modified, where the source MAC in the modified communication packet is MAC of GW2, and the destination MAC is MAC of a destination virtual machine corresponding to the destination IP. The modified communication packet is encapsulated, a packet header is added into the modified communication packet, where the packet header includes VNI2, the VNI identifier of the next-hop device VNE2, and the VxLAN packet C is obtained. GW1 sends the VxLAN packet C to VNE2.

It should be noted that before changing the destination MAC address of the communication packet, GW2 queries the locally stored MAC-IP mapping relationship to determine a MAC address corresponding to the destination IP address IP2 in the communication packet. If GW2 does not find the MAC address corresponding to IP2 in the locally stored MAC-IP mapping relationship, GW2 generates an ARP request that is used to request the MAC address corresponding to the IP2; determines that the IP2 belongs to a VNI2 subnetaccording to the destination IP, namely IP2, of the communication packet; encapsulates the ARP request to get a VxLAN multicast packet, where a VNI included in a packet header of the multicast packet is VNI2; and forwards the multicast packet in the VNI2 subnet, to obtain the MAC address corresponding to IP2 from the ARP response.

205. NVE2 decapsulates the VxLAN packet to obtain the communication packet, and sends the communication packet to VM2 indicated by the destination IP address and the destination MAC address in the communication packet.

In this embodiment of the present invention, a VxLAN packet is received, where a payload of the VxLAN packet includes a communication packet that is sent by a first VM to a second VM; a second VNI of a subnet in which a next-hop device of the communication packet is located is determined according to a VNI in a packet header of the VxLAN packet and an IP address of the second VM in the payload; the communication packet is encapsulated according to the second VNI; and then an encapsulated VxLAN packet is forwarded to the next-hop device through a tunnel corresponding to the second VNI. Because the VxLAN gateway determines, according to the IP address of the second VM and a first VNI, the second VNI of the subnet in which the next-hop device of the communication packet is located, a unique next-hop device may be determined, and the VxLAN packet is forwarded to the next-hop device accordingly, thereby avoiding that the VxLAN gateway can implement forwarding of the VxLAN packet only after the VxLAN gateway modifies the communication packet in the payload of the VxLAN packet, and improving efficiency for forwarding the VxLAN packet.

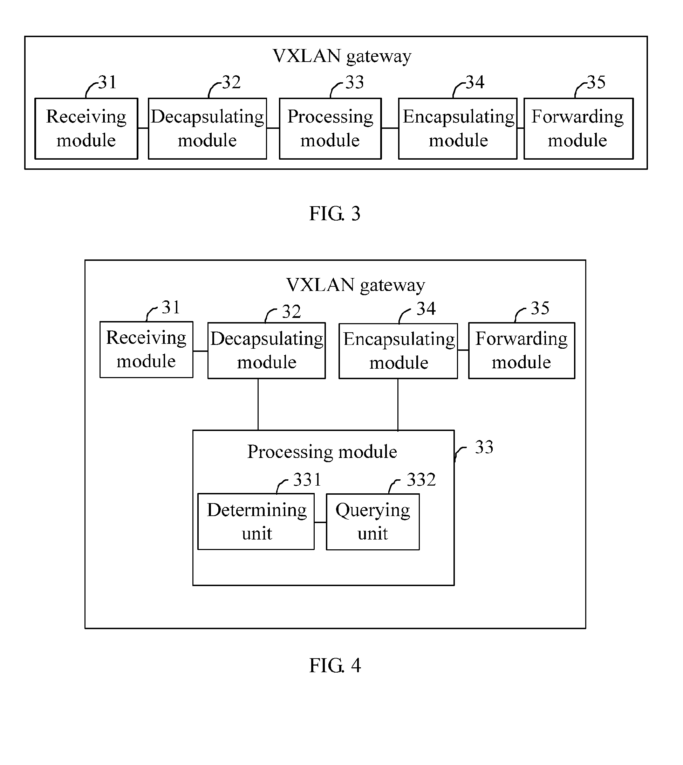

FIG. 3 is a schematic structural diagram of a VxLAN gateway according to an embodiment of the present invention. As shown in FIG. 3, the VxLAN gateway includes a receiving module 31, a decapsulating module 32, a processing module 33, an encapsulating module 34, and a forwarding module 35.

The receiving module 31 is configured to receive a VxLAN packet.

A payload of the VxLAN packet includes the communication packet, and a packet header of the VxLAN packet includes a first virtual extensible local area network network identifier VNI, where the communication packet is a packet sent by a first virtual machine VM to a second VM, and the first VM and the second VM belong to different subnets; and the communication packet includes an IP address of the second VM, and the first VNI is a network identifier of a subnet in which the first VM is located.

The decapsulating module 32 is connected to the receiving module 31, and is configured to decapsulate the VxLAN packet to obtain the first VNI and the communication packet.

The processing module 33 is connected to the decapsulating module 32, and is configured to determine, according to the IP address of the second VM and the first VNI, a second VNI of a subnet in which a next-hop device of the communication packet is located.

The encapsulating module 34 is connected to the processing module 33, and is configured to encapsulate the communication packet according to the second VNI, to obtain an encapsulated VxLAX packet.

The encapsulating module 34 is specifically configured to change the first VNI in the packet header of the VxLAN packet to the second VNI.

A packet header of the encapsulated VxLAX packet includes the second VNI, and a payload of the encapsulated VxLAX packet includes the communication packet.

The forwarding module 35 is connected to the encapsulating module 34, and is configured to send the encapsulated VxLAX packet to the next-hop device of the communication packet through a tunnel corresponding to the second VNI.

In this embodiment of the present invention, a VxLAN packet is received, where a payload of the VxLAN packet includes a communication packet that is sent by a first VM to a second VM; a second VNI of a subnet in which a next-hop device of the communication packet is located is determined according to a VNI in a packet header of the VxLAN packet and an IP address of the second VM in the payload; the communication packet is encapsulated according to the second VNI; and then an encapsulated VxLAN packet is forwarded to the next-hop device through a tunnel corresponding to the second VNI. Because the VxLAN gateway determines, according to the IP address of the second VM and a first VNI, the second VNI of the subnet in which the next-hop device of the communication packet is located, a unique next-hop device may be determined, and the VxLAN packet is forwarded to the next-hop device accordingly, thereby avoiding that the VxLAN gateway can implement forwarding of the VxLAN packet only afterthe VxLAN gateway modifies the communication packet in the payload of the VxLAN packet, and improving efficiency of forwarding the VxLAN packet.

FIG. 4 is a schematic structural diagram of a VxLAN gateway according to another embodiment of the present invention. Based on the foregoing embodiment, as shown in FIG. 4, the processing module 33 in this embodiment further includes a determining unit 331 and a querying unit 332.

The determining unit 331 is configured to determine, according to the first VNI, a routing table associated with the first VNI.

In the routing table associated with the first VNI, network identifiers of subnets in which next-hop devices corresponding to a same IP address are located are the same.

The querying unit 332 is connected to the determining unit 331, and is configured to query, according to the IP address of the second VM, the routing table associated with the first VNI, to obtain the second VNI.

When the routing table associated with the first VNI is pre-configured in an SDN controller, the querying unit 332 is specifically configured to query the SDN controller according to the first VNI and the IP address of the second VM, to obtain the second VNI.

For specific functions of the foregoing VxLAN gateway, refer to the packet forwarding method according to a first embodiment or a second embodiment, and details are not described herein again.

In this embodiment of the present invention, a VxLAN packet is received, where a payload of the VxLAN packet includes a communication packet that is sent by a first VM to a second VM; a second VNI of a subnet in which a next-hop device of the communication packet is located is determined according to a VNI in a packet header of the VxLAN packet and an IP address of the second VM in the payload; the communication packet is encapsulated according to the second VNI; and then an encapsulated VxLAN packet is forwarded to the next-hop device through a tunnel corresponding to the second VNI. Because the VxLAN gateway determines, according to the IP address of the second VM and a first VNI, the second VNI of the subnet in which the next-hop device of the communication packet is located, a unique next-hop device may be determined, and the VxLAN packet is forwarded to the next-hop device accordingly, thereby avoiding that the VxLAN gateway can implement forwarding of the VxLAN packet only after the VxLAN gateway modifies the communication packet in the payload of the VxLAN packet, and improving efficiency of forwarding the VxLAN packet.

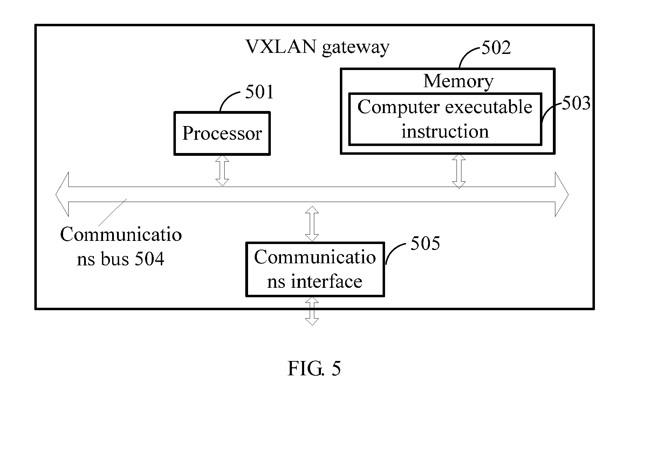

FIG. 5 is a schematic structural diagram of a VxLAN gateway according to another embodiment of the present invention. As shown in FIG. 5, the VxLAN gateway includes a processor 501, a memory 502, and a bus 504.

The processor 501 and the memory 502 are connected by using the bus 504 to communicate with each other.

The processor 501 may be a single-core or multi-core central processing unit, an application specific integrated circuit, or one or more integrated circuits that are configured to implement embodiments of the present invention.

The memory 502 may be a high-speed RAM memory, or a non-volatile memory (non-volatile memory), for example, at least one magnetic disk memory.

The memory 502 is configured to store a computer executable instruction 503. Specifically, the computer executable instruction 503 may include program code.

When the VxLAN gateway runs, the processor 501 runs the computer executable instruction 503, which can execute a method procedure of the packet forwarding method according to a first embodiment or a second embodiment.

It should be noted that the VxLAN gateway may further include a communications interface 505, and communicate with another network entity, such as a next-hop device, through the communications interface 505.

An embodiment of the present invention provides a computer readable medium, including a computer executable instruction; when a processor of a computer executes the computer executable instruction, the computer executes a method procedure of the packet forwarding method according to a first embodiment or a second embodiment.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A packet forwarding method, comprising:
receiving, by a virtual extensible local area network VxLAN gateway, a VxLAN packet, wherein: a payload of the VxLAN packet comprises a communication packet, and a packet header of the VxLAN packet comprises a first virtual extensible local area network network identifier VNI; the communication packet is a packet sent by a first virtual machine VM to a second VM, the first VM and the second VM belong to different subnets, and the communication packet comprises an IP address of the second VM; and the first VNI is a network identifier of a subnet in which the first VM is located;
decapsulating, by the VxLAN gateway, the VxLAN packet to obtain the first VNI and the communication packet;
determining, by the VxLAN gateway according to the IP address of the second VM and the first VNI, a second VNI of a subnet in which a next-hop device of the communication packet is located;
encapsulating, by the VxLAX gateway, the communication packet according to the second VNI, to obtain an encapsulated VxLAX packet, wherein a packet header of the encapsulated VxLAX packet comprises the second VNI, and a payload of the encapsulated VxLAX packet comprises the communication packet; and
sending, by the VxLAX gateway, the encapsulated VxLAX packet to the next-hop device of the communication packet through a tunnel corresponding to the second VNI.

2. The packet forwarding method according to claim 1, wherein the determining, by the VxLAN gateway according to the IP address of the second VM and the first VNI, a second VNI of a subnet in which a next-hop device of the communication packet is located comprises:
determining, by the VxLAN gateway according to the first VNI, a routing table associated with the first VNI, wherein in the routing table associated with the first VNI, network identifiers of subnets in which next-hop devices corresponding to a same IP address are located are the same; and
querying, by the VxLAN gateway according to the IP address of the second VM, the routing table associated with the first VNI, to obtain the second VNI.

3. The packet forwarding method according to claim 2, wherein when the routing table associated with the first VNI is pre-configured in a software defined network SDN controller, the querying, by the VxLAN gateway according to the IP address of the second VM, the routing table associated with the first VNI, to obtain the second VNI comprises:
querying, by the VxLAN gateway, the SDN controller according to the first VNI and the IP address of the second VM, to obtain the second VNI.

4. The packet forwarding method according to any one of claims 1 to 3, wherein the encapsulating, by the VxLAX gateway, the communication packet according to the second VNI comprises:
changing, by the VxLAN gateway, the first VNI in the packet header of the VxLAN packet to the second VNI.

5. A virtual extensible local area network VxLAN gateway, comprising:
a receiving module, configured to receive a VxLAN packet, wherein a payload of the VxLAN packet comprises a communication packet, a packet header of the VxLAN packet comprises a first virtual extensible local area network network identifier VNI; the communication packet is a packet sent by a first virtual machine VM to a second VM, the first VM and the second VM belong to different subnets, and the communication packet comprises an IP address of the second VM; and the first VNI is a network identifier of a subnet in which the first VM is located;
a decapsulating module, configured to decapsulate the VxLAN packet to obtain the first VNI and the communication packet;
a processing module, configured to determine, according to the IP address of the second VM and the first VNI, a second VNI of a subnet in which a next-hop device of the communication packet is located;
an encapsulating module, configured to encapsulate the communication packet according to the second VNI, to obtain an encapsulated VxLAX packet, wherein a packet header of the encapsulated VxLAX packet comprises the second VNI, and a payload of the encapsulated VxLAX packet comprises the communication packet; and
a forwarding module, configured to send the encapsulated VxLAX packet to the next-hop device of the communication packet through a tunnel corresponding to the second VNI.

6. The VxLAN gateway according to claim 5, wherein the processing module comprises:
a determining unit, configured to determine, according to the first VNI, a routing table associated with the first VNI, wherein in the routing table associated with the first VNI, network identifiers of subnets in which next-hop devices corresponding to a same IP address are located are the same; and
a querying unit, configured to query, according to the IP address of the second VM, the routing table associated with the first VNI, to obtain the second VNI.

7. The VxLAN gateway according to claim 6, wherein when the routing table associated with the first VNI is pre-configured in a software defined network SDN controller, the querying module is specifically configured to query the SDN controller according to the first VNI and the IP address of the second VM, to obtain the second VNI.

8. The VxLAN gateway according to any one of claims 5 to 7, wherein
the encapsulating module is specifically configured to change the first VNI in the packet header of the VxLAN packet to the second VNI.

9. A virtual extensible local area network VxLAN gateway, comprising a processor, a memory, and a bus, wherein
the memory is configured to store a computer executable instruction; the processor is connected to the memory by using the bus; and when the VxLAN gateway runs, the processor executes the computer executable instruction stored in the memory, so that the VxLAN gateway executes the packet forwarding method according to any one of claims 1 to 4.

10. A computer readable medium, comprising a computer executable instruction; when a processor of a computer executes the computer executable instruction, the computer executes the packet forwarding method according to any one of claims 1 to 4.
